**Europäisches Patentamt**

**European Patent Office**

**Office européen des brevets**

(19)

(11) Veröffentlichungsnummer: **0 393 507**
**A1**

(12) # EUROPÄISCHE PATENTANMELDUNG

(21) Anmeldenummer: **90107006.0**

(22) Anmeldetag: **11.04.90**

(51) Int. Cl.⁵: **A23B 4/052, A23L 3/3409**

(30) Priorität: **19.04.89 DE 8904886 U**

(43) Veröffentlichungstag der Anmeldung:
**24.10.90 Patentblatt 90/43**

(84) Benannte Vertragsstaaten:
**DE FR IT SE**

(71) Anmelder: **SCHRÖTER GMBH & CO. KG**
**Bahnhofstrasse 86**
**D-4807 Borgholzhausen(DE)**

(72) Erfinder: **Schröter, Max, Dipl.-Ing.**
**Rolandstrasse 5**
**D-4802 Halle/Westf.(DE)**

(74) Vertreter: **Hoefer, Theodor, Dipl.-Ing.**
**Kreuzstrasse 32**
**D-4800 Bielefeld 1(DE)**

(54) **Vorrichtung zum Erzeugen von Rauch für Räucheranlagen.**

(57) Bei einer Vorrichtung zum Erzeugen von Rauch, insbesondere zum Räuchern von Nahrungsmitteln o. dgl. mit einem Raucherzeuger in einem Gehäuse mit einer Zuführeinrichtung mit darüber angeordneter Dosiervorrichtung für zu versmokende Späne o. dgl., die auf einer mit Frischluft versorgten Brennerplatte aufliegen und nach dem Versmoken einem Ascheka- sten zugeführt sind, ist im Bereich der Brennplatte (16) ein mit Luftauslässen versehenes Rohr (31) verschiebbar gelagert. Dabei ist es bevorzugt, daß das verschiebbare Frischluftrohr (31) eine von der Wandung des Gehäuses (11) nach außen vorstehen- de Verlängerung aufweist.

Fig. 2

Fig. 3

EP 0 393 507 A1

## Vorrichtung zum Erzeugen von Rauch für Räucheranlagen

Die Erfindung bezieht sich auf eine Vorrichtung zum Erzeugen von Rauch, insbesondere zum Räuchern von Nahrungsmitteln wie Fleisch- oder Fischwaren, Käse o. dgl. mit einem Raucherzeuger in einem Gehäuse mit einer Zuführeinrichtung mit darüber angeordneter Dosiervorrichtung für zu versmokende Späne o. dgl., die auf einem mit Frischluft versorgten Brenner o. dgl. aufliegen und nach dem Versmoken einem Aschekasten o. dgl. zugeführt werden.

Für das Herstellen von Räucherrauch aus zerkleinertem Holz sind verschiedene Verfahren und Vorrichtungen bekannt. Zur Aufrechterhaltung des Glühens wird oftmals Luft zugeführt.

Bekannte Vorrichtungen zum Erzeugen von Rauch zum Räuchern haben verschiedene Nachteile, wie beispielsweise eine unregelmäßige Raucherzeugung aufgrund unregelmäßiger Verteilung der Holzspäne auf dem Brennrost. Die Frischluft wird oftmals ungenügend zugeführt oder schlecht verteilt, so daß das Brenngut zum Ersticken neigt. Auch kann ein zu dünner Rauch durch Zuführung eines Luft überschusses mittels zu großer Lufteinlaßöffnungen entstehen. Weiterhin enthalten derartige Raucherzeuger oftmals zuviele Einzelteile, die leicht von teerhaltigen Teilchen dcs Rauches oder Flugasche verunreinigt werden.

Bei bekannten Vorrichtungen sind Düsenöffnungen zum Einblasen der Frischluft an der Decke oder an den Seiten einer Kammer angeordnet, die wenig Variationsmöglichkeiten bieten.

Es sind weiterhin Verkohlungsplatten für die Späne o. dgl. bekannt, die eine geschlossene Oberfläche als Auflage aufweisen; derartige Platten können mittels elektrischer Widerstände beheizt sein.

Aufgabe der Erfindung ist es, eine Vorrichtung zum Erzeugen von Rauch zu schaffen, bei der diese Nachteile vermieden werden und bei der einerseits eine dosierte Frischluftzufuhr möglich ist, die in ihrem Zufuhrbereich gegenüber dem Brennrost o. dgl. veränderbar ist und die neben der Sauerstoffzufuhr zum Brenngut auch den Bewegungsstrom des erzeugten Rauches beeinflußt.

Die gestellte Aufgabe der Dosierung der Frischluftzufuhr wird bei einer Vorrichtung der genannten Gattung gemäß der Erfindung dadurch gelöst, daß im Bereich der Brennplatte ein mit Luftauslässen versehenes Rohr verschiebbar gelagert ist.

Mit der Verschiebung dieses Rohres läßt sich nicht nur die Zuluft (Frischluft) dosieren, sondern auch in ihrem Strömungsbereich und Strömungsverhalten derart beeinflussen, daß die Zuluft in der Nähe der Brennplatte austritt.

Bei einer bevorzugten Ausführungsform ist dieses verschiebbare Rohr in der Gehäusewandung der Vorrichtung derart ge lagert, daß im Betriebszustand Eintrittsöffnungen für die Frischluft außerhalb des Gehäuses, während die Austrittsöffnungen für die Frischluft innerhalb des Gehäuses sich erstrecken.

Mit einem Verschieben dieses Rohres in gewissen Grenzen ist es möglich, daß auch die Eintrittsöffnungen im Bereich der Gehäusewandung oder in dem Innenraum ues Gehäuses selbst liegen können, so daß keine Frischluft von außen eintreten kann (durchtreten kann).

Bei einer weiteren bevorzugten Ausführungsform können die Austrittsöffnungen für die Frischluft auf dem Rohr in verschiedenen Abständen über dessen Länge oder Umfang angeordnet sein, so daß nur ein Teil der Frischluft von außen in den innenraum eindringen kann.

Eine derartige Vorrichtung zum Erzeugen von Rauch ist vorzugsweise innerhalb eines Räucherschrankes angeordnet und zwar derart, daß der von dem Raucherzeuger abgehende Rauch unmittelbar einem mit Umluft o. dgl. arbeitenden Räucherschrank zugeführt werden kann.

Bei einer weiteren bevorzugten Ausführungsform ist dieses mit Frischluftöffnungen versehene Rohr stirnseitig mit einem vorzugsweise plattenförmigen Schieber ausgestattet, der die Asche von der Brennplatte, dem Brennrost o. dgl. beim Verschieben des Rohres abräumt und in einen Aschekasten fallen läßt.

Weitere Merkmale ergeben sich aus den Unteransprüchen.

Der Schutz erstreckt sich nicht nur auf die Einzelmerkmale sondern auch auf deren Kombination.

Ein Ausführungsbeispiel der Erfindung ist in der Zeichnung dargestellt und wird im folgenden näher beschrieben. Es zeigen:

Fig. 1 eine schematische Vorderansicht einer Kleinrauchanlage mit einem Raucherzeuger

Fig. 2 eine schematische Ansicht der Hackspäne-Dosiereinrichtung für die Raucherzeugung

Fig. 3 eine sich in Funktion befindliche Heizplatte mit Frischluftzuführung für die Verbrennungsluft

Fig. 4 die sich außer Funktion befindliche Heizplatte, mit einem das Gehäuse des Raucherzeugers luftdicht abschließenden Frischluftrohr.

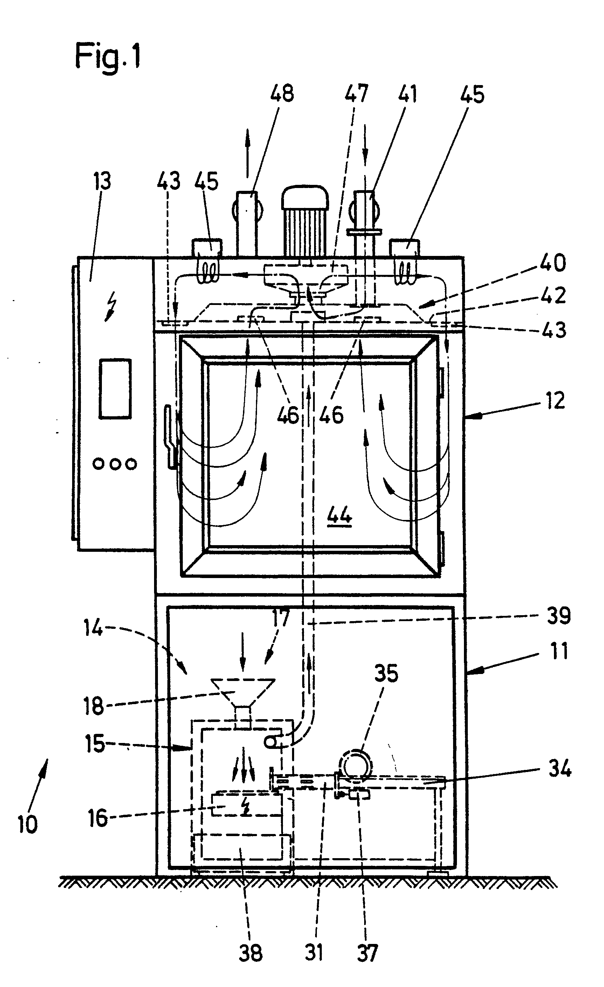

Eine Kleinrauchanlage (10) für z. B. Fleisch- und Wurstwaren ist ausgestattet mit einem auf dem Aufstellboden stehenden unteren Gehäuse (11), welches einen Raucherzeuger (14) aufnimmt und einem unmittelbar darüber sich anschließenden oberen, Gehäuse (12), dem eigentlichen Räucherbereich (44), an dem seitlich - gemäß Fig. 1 -eine elektrische Steuerungseinheit (13) für die verschiedenen Programmabläufe der Rauchanlage (10) angeordnet ist.

Im unteren Gehäuse steht der Raucherzeuger (14), der ein schrankförmiges, mit einer Tür verschließbares Gehäuse (15) aufweist, an dem innenseitig eine parallel zum Aufstellboden verlaufende elektrische Heizplatte (16) in etwa halber Gehäusehöhe befestigt ist. Oben auf dem Dach des Gehäuses (15) des Raucherzeugers (14) ist eine Dosiereinrichtung (17) für zu versmokende Holzspäne angeordnet. Diese Dosiereinrichtung (17) ist beispielsweise durch einen Vorratsbehälter (18) gekennzeichnet, der auf einem, auf dem Dach des Raucherzeugers (14) befestigten Aufnahmegehäuse (19) montiert ist. Dieses Aufahmegehäuse (19) kann beispielsweise ein kreisförmiges Rohr sein, in dem jeweils stirnseitig eine koaxiale Flügelwelle (20) drehbar gelagert ist. Diese kann beispielsweise mit zwei in einem rechten Winkel zueinander stehenden Flügelpaaren (21) versehen sein, so daß sich vier volumenmäßig gleich große Verteilerräume ( 22) für aufzunehmende Hackspäne bilden. Endseitig ist auf die Flügelwelle (20) ein koaxiales Ritzel (23) aufgesteckt, das sich verbunden mit dem Abtriebsritzel (24) eines taktenden Motors (25) - mittels einer Antriebskette (26) drehen kann. Auf dem Ritzel (23) der Flügelwelle (20) ist stirnseitig eine koaxiale Schaltfahne (27) angeordnet, die querschnittsmäßig so beschaffen ist, daß sie nach 1/4 Umdrehung, also 90°, einen Endschalter (28) betätigt, der Befehl an die elektrische Steuerungseinheit (13) gibt "Motor (25) aus". Die sich in dem Verteilerraum (22) befindlichen Holzspäne fallen dann durch eine Öffnung (29) im Dach des Gehäuses (15) auf die Heizplatte (16), der Schwelprozeß kann beginnen.

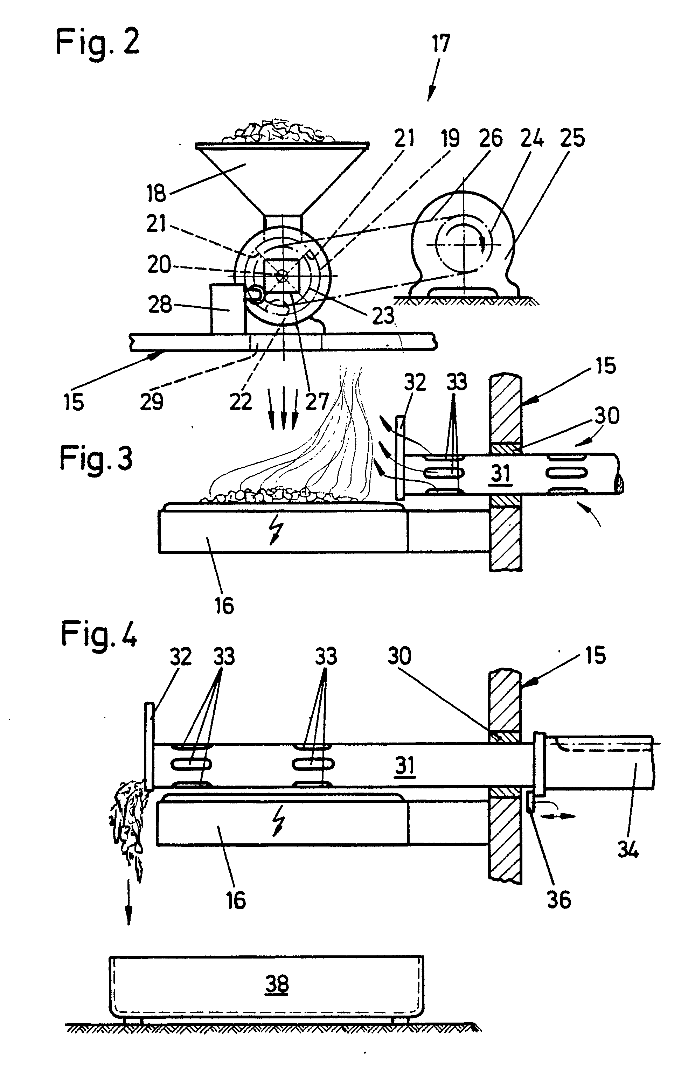

In der seitlichen Wandung des Gehäuses (15), an dessen Innenseite die elektrische Heizplatte (16) befestigt ist, ist eine Lagerbuchse (30) für ein sich darin parallel zum Aufstellboden verschiebbares Frischluftrohr (31) eingelassen, das an seiner zur Heizplatte (16) hinweisenden Stirnseite eine Schieberplatte (32) aufweist. Gemäß Fig. 3 und 4 sind in einem Abstand zur Schieberplatte (32), parallel zur Achsrichtung des Frischluftrohres (31) und untereinander nicht versetzt verlaufend, mehrere radial angeordnete, die Wandung des Rohres (31) durchdringende Lüftungsschlitze (33) vorgesehen. In einem achsialen Abstand weist das Rohr (31) zu diesen eine zweite Gruppe von Lüftungsschlitzen (33) auf. Entsprechend Fig. 3 ist das Frischluftrohr beim Räuchervorgang so positioniert, daß eine Gruppe von Lüftungsschlitzen (33} sich im Inneren des Gehäuses (15) befindet, die andere außerhalb.

Das verschiebbare Rohr (31) kann innerhalb des Gehäuses mindestens eine Länge des Abstandes der Brennplatte (16) von der Innenwandung des Gehäuses (11) haben. Nach außen (außerhalb des Gehäuses (11)) zeigt das Rohr (31) eine Verlängerung.

Es kann so auf einfachste Weise die für den Schwelvorgang einerseits und Rauchführung andererseits notwendige Frischluft zugeführt werden, eine aufwendige und teure Frischluftklappe o. dgl. ist nicht mehr notwendig.

Zur Vor- und Rückwärtsbewegung des Frischluftrohres (31) ist an der derschieberleiste (32) abgewandten Stirnseite eine in Achsrichtung des Frischluftrohres (31) verlaufende Zahnstange (34) o. dgl. befestigt, z. B. angeschweißt, in die das Abtriebsritzel (35) eines. Motors (nicht dargestellt) eingreift.

Zur Positionierung des Frischluftrohres (31) gem. Fig. 3 ist im Verbindungsbereich von Frischluftrohr (31) und Zahnstange (34) eine Schaltfahne (36) angebracht, z. B. angeschweißt, die beim Erreichen dieser Position einen ortsfesten Endschalter (37) beaufschlagt, der über die Steuerung (13) den Motor (nicht dargestellt) abschaltet. Bei einer weiteren Ausführungsform (s. Fig. 4) kann die Schaltfahne (36) in Verschiebebewegung des Frischluftrohres (31) gesehen beweglich ausgebildet sein. Bei entsprechender Anordnung zum Motor mit Abtriebsritzel (35) hin wird der Motor entsprechend eher abgeschaltet, die Lüftungsschlitze außerhalb des Gehäuses (15) haben nicht mehr den in Fig. 3 dargestellten Durchtrittsquerschnitt, da sie teilweise von der Lagerbuchse (30) abgedeckt werden und sich teilweise auch im Inneren des Gehäuses (15) befinden. Es kann also auf einfachste Art und Weise eine Verengung des Durchtrittsquerschnitts der Lüftungsschlitze (33) und somit eine individuelle Dosierung der für den Schwelvorgang notwendigen Frischluft erreicht werden.

Wenn die erneut auf die Brennplatte (16) gefallenen Hackspäne verkohlt sind (nach ca. 2 Min.), schaltet sich der Motor wieder ein und bringt das Frischluftrohr (31) in die in Fig. 4 dargestellte Position. Dabei bewegt sich die Schieberplatte (32) über die Brennplattenoberfläche hinweg und säubert diese von verkohlten Späneresten, die in einen darunter gestellten, mit Wasser gefüllten Spänekasten (38) fallen. Nach einer von der Steuerungseinheit (13) dem Motor mit dem Abtriebsritzel (35) vorgegebenen Zeit wird die Verschiebbewegung des Frischluftrohres (31) gestoppt. Soll kein weiterer Räuchervorgang stattfinden, verbleibt das Frischluftrohr (31) in dieser in Fig. 4 dargestellten Lage, beide Gruppen von Lüftungsschlitzen (33) befinden sich im Inneren des Gehäuses (15). Eine Frischluftzufuhr findet nicht mehr statt, da bedingt durch das enge Spiel zwischen Lagerbuchse (30) und Rohr (31) hier schon eine Abdichtung gewährleistet ist. Zwischen den äußeren Frischlufteingangsöffnungen (33) und den inneren Frischlufteingangsöffnungen ist dazu eine geschlossene Rohrzone vorgesehen. Das Frischluftrohr (31) kann auch unterhalb der Brennplatte (16) münden.

Der Funktions- bzw. Arbeitsablauf der Kleinrauchanlage wird wie folgt beschrieben: Nachdem die Brennplatte (16) eine eingestellte Temperatur erreicht hat, läuft der Motor (25) an und bewegt das Ritzel (23) der Flügelwelle (20) mittels mittels der Antriebskette (26) weiter. Die Drehbewegung wird nach 1/4 Umdrehung durch das Einwirken der Schaltfahne (27) auf den Endschalter (28) gestoppt. Einer von vier Verteilerräumen (22) des Aufnahmegehäuses (19) befindet sich genau über der Öffnung (29) im Dach des Gehäuses (15). Die Hackspäne fallen auf die Brennplatte (16). Der Schwelprozeß beginnt unter Frischluftzufuhr durch die Lüftungsschlitze (33) in das Innere des Gehäuses (15). Der Rauch gelangt über ein an das Gehäuse (15) angeschlossenes Rauchrohr (39) in den Unterdruckbereich (40) der Anlage, in den auch ein Frischluftrohr (41) mündet. So von einem Ventilator angesaugt werden Rauch und Frischluft über Ausblasdüsen (nicht dargestellt) in die Anlage eingeblasen. Bevor jedoch das Rauch-Luft-Gemisch durch seitliche, in einer Zwischendecke (42) des Unterdruckbereiches (40) in in einer Reihe hintereinander angeordneter Durchgangsöffnungen (43) den eigentlichen Räucherbereich (44) eintreten kann, passiert das Rauch-Luft-Gemisch eine auf dem Dach der Räucheranlage installierte Elektroheizung (45). Der Rauch durchzieht den Räucherbereich (44) und wird dem Unterdruckbereich (40) durch Eintrittsöffnungen (46) in der Zwischendecke (42) wieder zugeführt (vom Ventilator (47) angesaugt) und erneut in die Anlage eingelbasen. Frischluft und Rauch werden je nach Bedarf von mit Durckzylindern automatisch betätigten Stellklappen (nicht dargestellt) zugegeben, die im Rauch- bzw. Frischluftrohr installiert sind. Ebenfalls, je nach Bedarf, wird die Umluft mit Feuchtigkeit angereichert. Entstehende Abluft wird mit Hilfe eines Abluftrohres (48) ins Freie geführt.

Nach einer von der Steuerungseinheit (13) vorgegebenen Zeit, beispielsweise zwei Minuten, schaltet sich der Motor mit dem Abtriebsritzel (35), welches mit der Zahnstange (34) im Eingriff steht, ein und die am freien Stirnende des Frischluftrohres (31) angeordnete Schieberplatte (32) fährt über die Brennplatte (16) und räumt die verkohlten Späne ab, die in den unter der Brennplatte (16) stehenden Spänekasten (38) fallen (s. Fig. 4). Anschließend gehen Zahnstange (34) und Frischluftrohr (31) mit Schieberplatte (32) wieder in ihre Ausgangslage zurück )s. Fig. 3). Der Schwelprozeß beginnt von neuem, wie schon oben beschrieben.

Wenn der Rauchvorgang beendet werden soll, verbleibt die Schieberplatte (32) mit Frischluftrohr (31) nach dem Abräumen der verkohlten Späne in der in Fig. 4 dargestellten Position, wodurch der Brennraum luftdicht abgeschlossen wird.

## Ansprüche

1. Vorrichtung zum Erzeugen von Rauch, insbesondere zum Räuchern von Nahrungsmitteln wie Fleisch- oder Fischwaren, Käse o. dgl. mit einem Raucherzeuger in einem Gehäuse mit einer Zuführeinrichtung mit darüber abgeordneter Dosiervorrichtung für zu versmokende Späne o. dgl., die auf einer mit Frischluft versorgten Brennerplatte o. dgl. aufliegen, nach dem Versmoken einem Aschekasten o. dgl. zugeführt sind, dadurch gekennzeichnet, daß im Bereich der Brennplatte (16) o. dgl. ein mit Luftauslässen versehenes Rohr (31) verschiebbar gelagert ist.

2. Vorrichtung nach Anspruch 1, dadurch gekennzeichnet, daß das Rohr (31) parallel zur Oberfläche der Brennplatte (16) o. dgl. verschiebbar im Gehäuse (11) gelagert ist.

3. Vorrichtung nach Anspruch 1 oder 2, dadurch gekennzeichnet, daß das verschiebbare Rohr (31) als Frischluftrohr innerhalb des Gehäuses (11) mindestens eine Länge des Abstandes der Brennplatte (16) von der Innenwandung des Gehäuses (11) aufweist.

4. Vorrichtung nach einem der Ansprüche 1 bis 3, dadurch gekennzeichnet, daß das verschiebbare Frischluftrohr (31) eine von der Wandung des Gehäuses (11) aus nach außen vorstehende Verlängerung aufweist.

5. Vorrichtung nach einem der Ansprüche 1 bis 4, dadurch gekennzeichnet, daß Frischlufteingangsöffnungen (33) in der Verlängerung des verschiebbaren Frischluftrohres (31) nach außen angeordnet sind.

6. Vorrichtung nach einem der Ansprüche 1 bis 5, dadurch gekennzeichnet, daß auf dem teilverschiebbaren Frisch luftrohr (31) innerhalb des Gehäuses (11) Austrittsöffnungen (33) für Frischluft angeordnet sind.

7. Vorrichtung nach einem der Ansprüche 1 bis 6, dadurch gekennzeichnet, daß die Lufteingangsöffnungen und/oder die Luftaustrittsöffnungen (33) als Längsschlitze ausgebildet sind.

8. Vorrichtung nach den Ansprüchen 1 bis 7, dadurch gekennzeichnet, daß die Längsschlitze (33) auf dem Umfang des verschiebbaren Frischluftrohres (31) verteilt angeordnet sind.

9. Vorrichtung nach den Ansprüchen 1 bis 8, dadurch gekennzeichnet, daß zwischen den Frischlufteingangsöffnungen und den Frischluftausgangs-

Öffnungen (33) innerhalb des Gehäuses (11) eine geschlossene Rohrzone vorgesehen ist.

10. Vorrichtung nach einem der Ansprüche 1 bis 9, dadurch gekennzeichnet, daß in der Wandung des Gehäuses (11) eine gesonderte Lagerbuchse (30) eingelagert ist.

11. Vorrichtung nach einem der Ansprüche 1 bis 10, dadurch gekennzeichnet, daß am innenseitigen Ende des verschiebbaren Frischluftrohres (31) eine senkrecht dazu stehende Schieberplatte (32) angeordnet ist.

12. Vorrichtung nach einem der Ansprüche 1 bis 11, dadurch gekennzeichnet, daß die untere Stirnkante der Schieberplatte (32) in Höhe der Oberfläche der Brennplatte (16) angeordnet ist.

13. Vorrichtung nach einem der Ansprüche 1 bis 12, dadurch gekennzeichnet, daß das verschiebbare Frischluftrohr (31) mittels einer Zahnstange (34), eines Abtriebsritzels (35) u.s.w. hin- und herbeweglich gelagert ist.

14. Vorrichtung nach einem der Ansprüche 1 bis 13, dadurch gekennzeichnet, daß an der Verlängerung des verschiebbaren Frischluftrohres (31) auf der Außenseite des Gehäuses (11) eine Schaltfahne (36) mit Endschalter (37) angeordnet ist.

15. Vorrichtung nach einem der Ansprüche 1 bis 14, dadurch gekennzeichnet, daß die Schaltfahne (36) beweglich in Verschieberichtung des Frischluftrohres (31) gelagert ist.

16. Vorrichtung nach einem der Ansprüche 1 bis 15, dadurch gekennzeichnet, daß die Brennplatte (16) als elektrisch beheizte Platte mit geschlossener Oberfläche ausgebildet ist.

17. Vorrichtung nach einem der Ansprüche 1 bis 16, dadurch gekennzeichnet, daß diese Bestandteile eines Schrankes (11, 12) zum Räuchern, Backen, Kochen von Fleisch- und Wurstwaren ist.

## Fig.1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 770 157 (C.G. SHEPHERD) --- | | A 23 B 4/052 A 23 L 3/3409 |
| A | DE-A-1 093 184 (B. RITTER) --- | | |
| A | FR-A-2 597 722 (H.G. ROUQUAIROL) ----- | | |
| | | | RECHERCHIERTE SACHGEBIETE (Int. Cl.5) |
| | | | A 23 B |

Der vorliegende Recherchenbericht wurde für alle Patentansprüche erstellt

| Recherchenort | Abschlußdatum der Recherche | Prüfer |
|---|---|---|
| DEN HAAG | 25-06-1990 | GUYON R.H. |